# EUROPÄISCHE PATENTANMELDUNG

(11) **EP 4 039 082 A1**
(43) Veröffentlichungstag der Anmeldung: **10.08.2022**
(21) Anmeldenummer: 22000016.0
(22) Anmeldetag: 20.01.2022
(51) Int. Cl.: A01G 17/00, A01G 17/02

(54) **VERFAHREN ZUR GESTALTUNG EINES SPLITKOPF-DOPPELSTAMM-REBERZIEHUNGSSYSTEMS**

(30) Priorität: 23.01.2021 DE 102021000343
(71) Anmelder: Gantschev, Ljubomir, 10557 Berlin (DE)
(72) Erfinder: Gantschev, Ljubomir, 10557 Berlin (DE)

(57) **Zusammenfassung**

Es wird ein neuartiges Verfahren zur Gestaltung eines Splittkopf-Doppelstamm-Reberziehungssystems durch einheitlichen Radikalschnitt der Reben in der Reihe beschrieben, das ohne die Verwendung jeglicher Art von Fruchtruten auskommt und damit alle Nachteile der Fruchtrutenverwendung und die Wirkung der apikalen Dominanz beim heutigen Stand der Technik beseitigt. Die neuartige Splittkopf-Stockgerüstgestaltung und der Doppelstamm bilden eine schmale und lockere Trieb- und Laubstruktur, welche die Anwendung eines neuartiges Vogel- und Wespenschutzes und durch eine neuartige klappbare Überdachung auch den Einsatz von Traubenvollerntern ermöglicht. Das ist ein neuartiges Reberziehungssystem, das für die Anwendung im Weinbau gedacht ist, zu einer erheblichen Kostenersparnis beim Arbeitsaufwand, beim Materialverbrauch und bei der Versicherung führt und eine hohe Produktqualität sichert.

## Beschreibung

1. Verfahren zur Gestaltung eines Splitkopf/Doppelstamm-Reberziehungssystems mit Radikalschnitt in 2 Varianten: Splittkopf auf Einzelstamm mit versetzten Splittarmen und vertikalen Einzelköpfen entlang der Reihe als Variante 1 und Splittkopf auf Doppelstamm mit horizontalen Einzelköpfen entlang der Reihe als Variante 2.

2. Die Erfindung basiert auf einer Grunderfindungsidee, die mit ergänzenden Erfindungen zu einer Erfindungsgruppe je nach Spezifik der 2 Varianten ausgebaut wurde. Sie betrifft die Gestaltung eines "Splittkopf"-Reberziehungssystems mit Radikalschnitt, das im Weinbau Anwendung finden kann. Splittkopf und Doppelstamm sind bei der Reberziehung im Weinbau etwas ganz Neues. "Splittkopf" bedeutet, dass 1 Rebkopf einige Einzelköpfe und eine Rebe einige Splittköpfe haben kann. Damit wird erreicht, dass jeder einzelne Trieb des Rebstocks seinen eigenen Kopf hat, der nur diesen einzelnen Trieb versorgt.

Es ist ein technisches Verfahren zur Gestaltung eines neuartigen Reberziehungssystems unter Verwendung von zum Teil lebendigem Material in Form von Rebpflanzen im Weinberg.

Im Weinbau werden unter Reberziehung die Stockgerüstbildung, die Fruchtrutenbildung, die Triebanordnung, die Laubwandgestaltung, das Unterstützungsgerüst und andere Komponenten sowie die dazu erforderlichen Arbeitsmaßnahmen verstanden. Die Bezeichnung Reberziehung beinhaltet die technische Rahmenkonstruktion in all ihren Bestandteilen, die durch die historisch bedingte technische Entwicklung ständig erweitert worden sind. Dieser technische Rahmen bildet zusammen mit der unterschiedlichen Stockgerüstgestaltung ein für jede Reberziehung spezifisches Reberziehungssystem.

Weil es für die Patentanmeldung wichtig ist, verweise ich auf die Begriffe der Reberziehung und des Reberziehungssystems sowie deren Inhalt gemäß Wikipedia unter der Rubrik Reberziehung. Dort sind auch alle Erziehungssysteme, der Stand der jeweiligen Technik und deren Gestaltung wie auch Vor- und Nachteile beschrieben. Folgendes Zitat stammt aus Wikipedia:
"Unter Reberziehung versteht man im Weinbau alle Maßnahmen, die ein charakteristisches Stockgerüst aus altem Holz der Rebstöcke ergeben, wobei die Pflanzentfernung, das Unterstützungsgerüst (Stecken, Pfähle, Spanndrähte u. a.) und der Schnitt des einjährigen Holzes (Schnittlänge, Anordnung, Formierung) mitentscheidend sind. Damit ergibt sich ein bestimmtes Erziehungssystem. Das Erziehungssystem wird beeinflusst von der Rebsorte, der beabsichtigten Qualität, vom Arbeitsaufwand und von den Gebietsbesonderheiten. Bei allen Erziehungssystemen ist man bestrebt, einerseits eine möglichst gute Laubwandstruktur (zur Sicherung der Qualität und Quantität) und andererseits arbeitswirtschaftliche Vorteile zu erreichen." Bezogen auf die obige Beschreibung sind Reberziehungssysteme ein ständig durch neue Erfindungsideen sich erweiternder Komplex von unterstützenden Einrichtungen bzw. Komponenten und technischen Arbeitsmaßnahmen zur Wachstums-, Qualitäts-, Kosten- und Arbeitsoptimierung bei der Bewirtschaftung von Reben im Weinbau.

### 3. Stand der Technik

Die Reberziehungssysteme sind historisch gewachsen und sehr unterschiedlich. All die unterschiedlichen Gestaltungsformen des Stockgerüsts der Reberziehungssysteme - ob als Niedrig-, Mittel-, Hoch-, Rückwärts-, Einwand-, Splittwand-, Doppelwand-Stockgerüst etc. - haben eines gemeinsam: Fruchtruten aus ein- oder mehrjährigem Holz, als Zapfen, Strecker oder 1 bis 1,7 m lange Ruten.

Sie bilden zwei Gruppen, die zurzeit am meisten Anwendung im Weinbau finden:
die Kordonerziehungssysteme und die Spaliererziehungssysteme.
- Bei der Kordonerziehung besteht die Rute aus mehrjährigem Holz, das an einem Draht entlang gebunden ist, mit 1 bis 1,7 m Länge und 10 bis 12 kurzen Zapfen.
- Bei der Spaliererziehung besteht die Rute aus einjährigem Holz, das auf zweijährigem Holz gewachsen, 1 bis 1,7 m lang und am ersten Draht je nach Länge als Flach-, Halb- oder Hochbogen gebunden ist.
- Der Unterstützungsrahmen der heute überwiegend angewendeten Erziehungssysteme besteht aus Pfosten im Abstand von jeweils 4 m mit 3 bis 4 ein- oder doppelreihigen, horizontal verlaufenden Drähten.
- Der Anmelder ist der Erfinder eines neuartigen Erziehungssystems basierend auf einem Radikalschnittsystem, d. h. ohne Verwendung jeglicher Fruchtruten wie Zapfen, Strecker, langer Rutten u. a. Genauso wie bei den oben genannten Kordon- und Spaliererziehungssystemen sollte es auch verschiedene Radikalschnittsysteme geben, die durch die unterschiedliche Stockgerüstgestaltung und die spezifischen Komponenten unterschiedliche Eigenschaften und Vorteile haben und im Weinbau Anwendung finden können. Diese Anmeldung ist solch eine neuartige Reberziehungssystemvariante, nämlich als Splittkopf und Doppelstamm in 2 Varianten mit Radikalschnitt.

Im Laufe des technischen Fortschritts haben sich Unterstützungsrahmen, Überdachung, Bewässerung und Netzschutz als Komponenten der Reberziehungssysteme etabliert, vereinzelt findet man versuchsweise auch stationäre Applikation. Der Anmelder meldet jetzt auch neue Reberziehungskomponenten als Bestandteil dieses neuartigen Reberziehungssystems an.

### 4. Nachteile der Erziehungssysteme gemäß Stand der Technik

### - Stockgerüstgestaltung

Die Triebe aus den Augen der Fruchtruten aller Art sind naturgemäß zu dicht aneinander, ca. 8 bis 12 cm. Die Rebblätter sind ca. 20 cm groß. Die aneinander hochwachsenden Triebe und

Blätter bilden eine dichte Laubwand. Diese beschattet sich selbst, behindert die Belüftung, hält Feuchtigkeit um die Blätter und Trauben herum in sich und begünstigt dadurch Krankheitsentwicklungen.

Bei der Zuordnung der langen Fruchtruten durch Biegen zu Flach-, Halb- und Hochbogen der Spaliererziehung besteht die Gefahr, dass die Fruchtrute bricht. Zudem verflechten sich die Trauben in der dichten Triebwand.

Bei langen Fruchtruten zeigt die Rebe ihre Polarisierungseigenschaft (apikale Dominanz). Am Ende hat die Rute eine sehr starke Trieb- und Fruchtbildung, zum Kopf hin hingegen schwächere Triebe und eine geringe Fruchtbildung. Schwache Triebe und eine schwache Frucht werden entfernt, weil sie unnütz sind, große Trauben werden halbiert, damit sie einen höheren Zuckergehalt bilden. Das bedeutet hohe Kosten und außerdem einen Ertragsverlust.

### - Unterstützungsrahmen

Beim Wachsen hängen die Triebe durch ihr eigenes Gewicht nach unten und brauchen eine Stütze. Die hohe Dichte und die schwere Blattwand brauchen eine stabile Befestigung am Drahtrahmen; hier wird in 2 bis 3 Durchgängen per Hand oder maschinell geheftet, was einen hohen Arbeitsaufwand und erhebliche Kosten bedeutet. Im Frühjahr muss, damit die neuen Fruchtruten geschnitten werden können, das Altholz aus dem Drahtrahmen entflochten werden; auch dies bringt einen hohen Arbeitsaufwand und hohe Kosten mit sich. Das neue Reberziehungssystem hat nichts mit den bestehenden Systemen gemeinsam. Es ist kein Kordon- oder Spaliersystem und hat ein eigenes neuartiges Stockgerüst. Bei dem neuen Reberziehungssystem tritt keine Blattwand auf.

Jede Rebe bildet ihr eigenes Stockgerüst, aus: Stamm und Splittkopf, bestehend aus 2 versetzten Splittarmen mit je 2 bis 3 vertikalen Einzelköpfen auf einem Niveau mit je 1 Trieb, entlang der Reihe als Variante 1 und aus: Doppelstamm und Splittköpfen, mit horizontalen Splittarmen mit je 2 bis 3 Einzelköpfen mit je 1 Trieb, entlang der Reihe als Variante 2.

### - Überdachung

Eine Überdachung wird nur bei Tafeltrauben angewendet. Die Konstruktion ist schwer und kostspielig und wird aus diesen Gründen bei Keltertrauben nicht angewendet. Dazu kommt, dass die verbreiteten Kordon- und Spaliersysteme mit ihrer Gipfelung von oben eine Überdachung unmöglich machen, wenngleich diese sehr nützlich wäre.

### - Bodenschutz

Der Bodenschutz ist ein wichtiger Bestandteil der Reberziehungssysteme im Weinbau. Zurzeit wird die Gassenbegrünung als Bodenschutzmethode angewendet, indem die Gassen mit meistens niedrigwachsenden Kleegräsern begrünt werden anstelle des Unkrautwuchses. Das ist zwar besser als Unkrautwuchs, behebt aber nicht die Probleme, egal bei welcher Begrünung, weil die Begrünungspflanzen einen sehr wichtigen Faktor für das Wachstum der Reben verbrauchen, nämlich Wasser. Das Wasser wird zuerst von den Gräsern aufgenommen, und dann gelangt, was übrig bleibt, in die tiefer liegenden Schichten der Erde zur Rebwurzel. Bei dem allgemeinen Mangel an Regen und den hohen Temperaturen in den Weinbaugebieten der neueren Zeit stellt das ein enormes Problem dar.

Zweitens düngt, wenn die Begrünung als Stickstoffdüngung für die Reben geschnitten wird, diese zuerst die Begrünungspflanzen selbst, und nur wenn etwas übrig bleibt, sinken die Stickstoffrestnährstoffe nach heftigem Regen, falls es einen solchen gibt, in das Erdreich. Ein anderer Nachteil ist, dass die Begrünung die Feuchtigkeit behält, die langsam verdunstet, und das führt zu einer hohen Feuchtigkeit in den Gassen, was die Pilzvermehrung und Pilzkrankheiten fördert. Hinzu kommt, dass die Begrünung deren Entwicklung fördert und ein Heim für viele Phytoschädlinge der Rebe ist, die dort leben und sich vermehren. Der Stand der Technik ist in dieser Hinsicht momentan so, dass man die o. g. Nachteile duldet, weil man im Weinbau keinen guten Bodenschutz gefunden hat. Eine wesentlich bessere Bodenschutzmethode gibt es aber. Sie wird weiter unten als Bestandteilkomponente des neuen Reberziehungssystems beschrieben.

### - Vogel und Wespenschutz

Der Vogel- und Wespenschutz findet meistens mit Anwendung von Netzen statt. Die Anwendung von Chemikalien ist verboten, wenn die Ernte bevorsteht, aber auch, um die Tiere nicht zu schädigen. Der Schutz beträgt im Stand der Technik max. 60 %.

5. Der Erfinder hat sich allen oben aufgezählten und beschriebenen Problemen gestellt und sie mit den Eigenschaften eines neuartig gestalteten Reberziehungssystems in einer Gruppe von zusammenhängenden technischen Erfindungen ausgehend von einer einzigen allgemeinen erfinderischen Idee erfindungsgemäß gelöst durch die im kennzeichnenden Teil des Anspruchs 1 angegebenen Merkmale. Vorteilhafte Weiterbildungen des mit der Erfindung gegebenen Verfahrens ergeben sich aus den Unteransprüchen.

6. Im Folgenden werden alle Bestandteile und das Verfahren für die Gestaltung der neuartigen Komponente des Reberziehungssystems dargelegt.
- Die Grunderfindungsidee bestand darin, ein Verfahren zur Gestaltung eines neuartigen Splittkopf-Doppelstamm-Reberziehungssystems mit Radikalschnitt zu erfinden. Beim Splittkopf sind die einzelnen Köpfe auf einem Niveau und der Doppelstamm bietet mehr Platz für die Unterbringung mehrerer Splittköpfe, welche mit der Anwendung eines einheitlichen Radikalschnitts der Reben in der Reihe, sprich mit der Gestaltung des Rebenstockgerüstes ohne jegliche Art von Fruchtruten, wie Zapfen, Strecker, lange Ruten, als Kordon- oder Spalierfruchtruten, dafür sorgen, dass jeder Rebstock wie ein einzelner Baum in der Reihe steht und voll seine Triebstruktur- und Fruchtlast trägt.
- Das Ziel dieser Anmeldung und die Grunderfindungsidee ist, ein neuartiges Splittkopf-Reberziehungssystem mit Radikalschnittanwendung zu gestalten, welches die Ausprägung der physiologischen Neigung der Rebe zur apikalen Dominanz überwindet - sprich negiert.

### 7. Erklärungen zu Begriffen im Weinbau im Zusammenhang mit der Anmeldung

- Wasserschosse sind grüne Triebe, die im Vegetationsjahr aus dem Altholz entlang des Rebenstammes und des Kopfes wachsen. In der Praxis ist der Stand der Technik, dass die Wasserschosse am Stamm abgebürstet, am Kopf eventuell 1 bis 2 als Ersatzruten für das Folgejahr belassen und die restlichen entfernt werden.
- Nodien sind die Verdickungen (Knoten) an Grüntrieben und einjährigem Holz, aus denen im Vegetationsjahr Blätter, Trauben und Geize wachsen.
   Die letzte Nodie vor dem Kopf wird Basisnodie genannt. Sie ist wesentlich kürzer im Vergleich zu den anderen, höher liegenden Nodien am Trieb und wird als "Majak" verwendet. Das Abstandholz zwischen zwei benachbarten Nodien wird als Internodie bezeichnet.
- Geize sind Grüntriebe, die aus den Achseln der Blätter aus einem Grüntrieb wachsen, der aus einem Auge oder als Wasserschoss gewachsen ist.
- Die Schnittart der Rebe an sich kann sehr unterschiedlich sein. Je nach Schnittart der Rebe und Triebzuordnung werden spezifische Reberziehungssysteme mit unterschiedlichen Eigenschaften gebildet.

### 8. Verfahren zur Gestaltung des neuartigen Splittkopf-Doppelstamm-Reberziehungssystems und Anwendung des Radikalschnitts für alle Reben in der Reihe in 2 Varianten

Die Erfindungsidee, einen Splittkopf zu bilden, resultierte aus der Notwendigkeit, die physiologische Veranlagung der Rebe, den größten Saftdruck auf die entferntesten Augen und Triebe auszuüben, genannt apikale Dominanz, zu überwinden.

Die apikale Dominanz bewirkt ein hohes Wachstum der entfernteste Augen/Triebe, das dann zum Stamm hin abnimmt. Das bedeutet, dass vom höchsten Trieb nach unten Triebwuchs und Ertrag weniger werden. Der Erfinder kam auf die Idee, durch "Splitten" des Kopfes in mehrere kleine Einzelköpfe mit nur einem Trieb, die sich alle auf einem hohen Niveau befinden, den Saftdruck in allen Einzelköpfen zu vereinheitlichen, um dadurch einen gleichmäßigen Wuchs und eine gleichmäßige Traubenbildung zu bewirken. Wenn die Einzelköpfe gebildet sind, lässt man aus jedem Kopf nur ein Auge/ Trieb wachsen. Im Folgejahr werden aus den Basisnodien diese Triebe durch Schneiden kurz über der Basisnodie und durch Blenden des Auges der Basisnodie die vom Erfinder sogenannten "Majaks" gebildet. Diese Bezeichnung steht für Nodienzapfen ohne Auge, die keine Frucht tragen, sondern durch die Austrocknung des Auges und der Nodie wie ein Stöpsel wirken und den Saftdruck nach unten auf den Internodienaufsatz und die Einzelköpfe, wo sich ein Wasserschossauge befindet, verlagert. Damit entsteht ein Stockgerüst bestehend aus: einem Stamm und einem Splittkopf aus mehreren Einzelköpfen mit Wasserschosstrieben mit balanciertem Druck. Beim Doppelstamm wird der Saftdruck zuerst auf die 2 Stämme und dann nicht oben am Stammende, sondern weiter unten zwischen den Splittköpfen und den Einzelköpfen dezimiert verteilt. Der Saftdruck auf alle Triebe ist ausgeglichen, die apikale Dominanz wirkt nicht und alle Triebe wachsen und tragen gleichmäßig Früchte. Dieses neuartige Reberziehungssystem beseitigt die Wirkung der apikalen Dominanz.

### 9. Verfahren zur Gestaltung eines neuartigen Splittkopf-Stockgerüstes

Oben wurden die Prinzipien und die Erfindungsidee für den Aufbau des Stockgerüstes beschrieben, es folgt die technische Gestaltung der 2 Varianten von Splittkopfgerüsten.

Die Idee der Bildung eines "Splittkopfes" führt zu einem neuartigen spezifischen Stockgerüst. Das Stockgerüst besteht aus einem Stamm/Doppelstamm mit Armen, jeder mit 2 bis 3 Fingern mit 1 Einzelkopf, an deren Spitzen je eine Basisnodie (Majak) geschnitten wird, aus deren Aufsatz auf den Einzelkopf ein Majak-Wasserschoss als Grüntrieb wächst und Früchte trägt.

Das Stockgerüst des Splittkopfes der Variante 1 (s. Zhng. 1) wird so gebildet:
Der Stamm (B1) wird von der Basis aus auf ca. 2 m Höhe und mit ca. 1 cm Stärke wachsen gelassen, dann auf 70 cm Höhe geschnitten. Das letzte Auge bei 70 cm wird geblendet, die 2 Augen darunter bei ca. 60 und 65 cm werden wachsen gelassen und alle anderen Augen darunter am Stamm werden geschnitten, damit der Stamm sauber ist und dort keine weiteren unerwünschten Triebe wachsen. Wenn die 2 Triebe gewachsen sind, werden sie rechts und links in Position 10 bzw. 16 Uhr an 2 in 90 cm Höhe horizontal verlegte Drähte (G) gebunden, die am Pfosten (A) montiert hängen. Im Folgejahr werden diese 2 Triebe als gebildete Splittarme (C) in 95 cm Höhe geschnitten und es wird bis zum Stamm je ein Trieb rechts und links pro Splittarm wachsen gelassen. Im Folgejahr werden diese Triebe auch in 95 cm Höhe geschnitten und in 15 cm Abstand zueinander an die 2 in 90 cm Höhe verlegten Drähte (G) gebunden. Damit entsteht ein "versetzter" Splittkopf (D) mit 2 Splittarmen (C) mit je 3 vertikalen Splittfingern (C1) in "Zickzack"-Form, indem der eine Arm mit seinen 3 Fingern an den rechten Draht (G) und der andere an den linken Draht (G) der Reihe in 90 cm Höhe mit den Fingerbindern (C2) gebunden werden. Die Triebe (E1) jedes Armes wachsen vertikal mit 15 cm Abstand zueinander jeweils auf ihrer Seite der Reihe und werden an 2 Paar Drähten (G) jeweils bei 120 und 150 cm befestigt. Diese Form des Stockgerüstes verhindert die Entstehung von Trieben einer Doppelwand. Es entsteht eine sehr lockere Laubstruktur/Laubbelüftung. Jede Rebe steht wie ein eigener Baum entlang der Reihe mit 3 Ästen rechts und links an jedem Arm.

Das Stockgerüst des Splittkopfes der Variante 2 (s. Zhng. 2) wird so gebildet:
Der Stamm (B2) wird von der Basis auf 2 m Höhe und mit 1 cm Stärke wachsen gelassen, dann auf 70 cm Höhe geschnitten. Das letzte Auge wird entfernt, die 2 Augen darunter werden bis auf 2 m Höhe wachsen gelassen und auf Position 12/18 Uhr an die Drähte (G) gebunden.

Im Folgejahr entsteht ein Doppelstamm (B3) quer zur Reihe, bestehend aus Stamm (B2) und 2 Stammarmen (B4). Die Augen der 2 Stammarme (B4) auf der Höhe 110 cm, die rechts und links entlang der Reihe zeigen, werden wachsen gelassen und die restlichen entfernt, damit der Stamm zukünftig sauber von Wildwuchstrieben bleibt.

Im Folgejahr werden diese Triebe als Zapfen mit 3 Augen geschnitten und wachsen gelassen, wobei der Trieb des Stirnauges nach vorne wächst und dort an den Draht (G) gebunden wird und die anderen 2 Triebe nach oben bzw. nach unten ausgerichtet wachsend an den oberen bzw. unteren Draht (G) gebunden werden. Im Folgejahr entsteht dort, wo die o. g. Triebe an die Drähte (G) gebunden sind, durch die Bildung

von Majaks (D2) und Einzelköpfen (D1) mit je einem Trieb (E1) rechts und links am Stamm je 1 vertikaler Splittkopf (D) mit je 1 Splittarm (C) mit je 3 Splittfingern (C1) mit entlang der Reihe ausgerichteten Einzelköpfen (D 1) mit Trieben (E1), gebunden mit Triebbindern (F) an die Drähte (G), entlang der Reihe. An jedem Stammarm (G4) des Doppelstammes (B3) können, je nach Abstand zwischen den Reben, nach erwünschter Ertragsbelastung und Rebsorte, ein- oder beidseitig 2- oder 3-fingrige Splittköpfe (D) angebracht werden. Das ist aus den Zeichnungen ersichtlich (s. Zhng. 2-6).

### 10. Verfahren zur Gestaltung von Unterstützungsrahmen der 2 Splittkopf-Varianten

Der Unterstützungsrahmen der Stockgerüste der 2 Splittkopf-Varianten wird aus dem im Weinbau verwendeten gängigen Pfosten mit angehängten Drähten, an denen die Stockgerüste und Triebe befestigt werden, gestaltet. Das spart Kosten bei einer Systemumstellung.

### 11. Verfahren zur Gestaltung einer neuartigen Überdachung

Die Entstehung einer schmalen Stock- und Triebgerüststruktur der 2 Splittkopf-Varianten brachte den Erfinder auf die Idee, eine speziell für die Splittkopf-Reberziehung entwickelte Überdachung erfinderisch zu gestalten, die zusammenklappbar ist und den Einsatz von Traubenvollerntern ermöglicht, was ihm in 2 Varianten gelungen ist.

Die Überdachung der Variante 1 (s. Zhng. 7) wird so gestaltet:
Zwischen den Gipfeln der Pfosten (A) entlang der Reihe wird der Dachwinkel (I1) und auf jedem Gipfel quer zur Reihe ein Dachhalter (I) befestigt. Auf dem Dachwinkel (I1) und dem Dachhalter (I) wird entlang der Reihe das Dachcenter (J) verlegt und befestigt. Auf die Seiten des Dachcenters (J) wird das Dachflügel-R (J1) bzw. das Dachflügel-L (J2) mit dem Flügelscharnier (J3) nach oben klappbar befestigt. Auf dem Dachflügel-R (J1) und dem Dachflügel-L (J2) sind Flügelriegel (J4) angebracht, die in aufgeklapptem Zustand das Dachflügel-R und das Dachflügel-L durch das Dachcenterrohr (J6) am Dachcenter (J) und in zugeklapptem Zustand sich gegenseitig verriegeln. Aufgeklappt ist die Überdachung 90 cm und zugeklappt 55 cm breit. Die Höhe ist 210 cm bei einer Pfostenhöhe von 190 cm. Als Überdachungsmaterial werden UV-geschützte 8-mm-Polycarbonatplatten verwendet.

Die Überdachung der Variante 2 (s. Zhng. 8) wird so gestaltet:
Zwischen den Gipfeln der Pfosten (A) entlang der Reihe wird der Dachwinkel (I1) und auf jedem Gipfel quer zu Reihe ein Dachhalter (I) befestigt. Auf dem Dachwinkel (I1) und dem Dachhalter (I) wird entlang der Reihe das Dachcenter (J) verlegt und befestigt. An den Seiten des Dachcenters (J) werden das Dachflügel-R (J1) bzw. das Dachflügel-L (J2) mit dem Flügelscharnier (J3) nach oben klappbar befestigt. Auf dem Dachcenter (J) ist rechts und links je ein Flügelriegel (J4) angebracht, die in aufgeklapptem Zustand die unteren Enden von Dachflügel-R und Dachflügel-L durch Schieben des Flügelriegels (J4) nach außen verriegeln und in zugeklapptem Dreieckzustand die unteren Enden von Dachflügel-R (J1) und Dachflügel-L (J2) durch die nach unten gebogene Spitze der Flügelriegel (J4) daran
hindern, sich zu öffnen, und durch die Riegelsperre (J5) daran, sich zurückzubewegen. Aufgeklappt ist die Überdachung 90 cm und zugeklappt 26 cm breit. Die Höhe ist 226 cm bei einer Pfostenhöhe von 190 cm. Als Material für die Überdachung wurden UV-geschützte 8-mm-Polycarbonatplatten verwendet.

### 12. Verfahren zur Gestaltung eines neuartigen Vogel- und Wespenschutzes

Es wird ein Schutz gegen Vögel und Wespen beschrieben, der ohne Netze funktioniert. Das erspart viele Kosten, die bei der Anwendung von gängigen Netzschutzsystemen entstehen.

Es ist bekannt, dass gegen Wespen mit Spritzbrühen vorgegangen wird. Diese wirken aber nur kurze Zeit, oft ist das Spritzen teuer und hat gegen Vögel keine Wirkung.

Der Erfinder hat sich die Aufgabe gestellt, mit einer erfinderischen Idee neuartig das Problem des Vogel- und Wespenbefalls der Weintrauben zu lösen, was ihm gelungen ist.

Die erfinderische Idee bestand darin, eine Substanz als Schutz zu finden, welche die Weintrauben nicht schädigt, beim Keltern der Trauben chemisch neutral ist, den Vögeln und Wespen nicht schadet, sondern diese physiologisch nicht anzieht in dem Sinne, dass die besprühten Weintrauben für sie keine Nahrung sind. Wie kommt das zustande?

Die erfinderische Idee setzt auf die physiologische Veranlagung sowohl der Vögel als auch der Wespen, die Farbe der Früchte als Erkennungszeichen für deren Reife zu werten. Die Farben Gelb, Rosa, Rot und Blau signalisieren ihnen, dass die Früchte schon reif sind, und sie greifen die Weintrauben an. Wenn die Trauben noch grün sind, greifen sie nicht an, weil diese Farbe keine Reife signalisiert. Dieser Logik und Verhaltensweise der Vögel und Wespen folgend, kam der Erfinder auf die Idee, die Weintrauben bei Reifebeginn mit einer geeigneten organischen Spritzbrühe weiß zu färben, weil die Farbe Weiß für die Vogel und Wespen keine Signalfarbe für Reife ist. Aus welchen Komponenten soll die Spritzbrühe bestehen, damit diese auf dem glitschigen Paraffinüberzug der Trauben gut und ausreichend lange, bis die Trauben erntereif sind, haftet und auch nicht vom Regen leicht ausgespült wird? Die Lösung war, als Farbe hydriertes Kalkpulver Ca(OH)₂ und als Haftmittel Stärke zu nehmen. Welche Eigenschaften haben diese Komponenten?

Das hydrierte Kalkpulver besteht aus bei sehr hoher Temperatur gebackenem Kalkstein, der danach gelöscht, hydriert und zu sehr feinem Pulver gemahlen wird. Es wird als Zusatz beim Mörtel verwendet, ist gut wasserlöslich, hat eine gute Haftfähigkeit an Oberflächen, verhärtet bei Austrocknung flexibel und ist leicht antiseptisch; beim Keltern der Trauben setzt es sich am Boden ab und hat keine Wirkung auf die Fermentation der Maische. Was das Haftmittel betrifft, kann jedes organische Haftmittel verwendet werden, das keinen Geruch, Geschmack und negativen Einfluss auf die Fermentation hat. Der Erfinder hat bei seinen Versuchen einfache Stärke mit Erfolg verwendet, weil sie billig, leicht und homogen löslich ist, aufquellt und eine sehr gute

Haftfähigkeit hat. Beim Austrocknen bildet sich mit dem Kalküberzug eine flexible und zähe Schicht, die sich bei Regen nicht von den Weintrauben löst.

Eine aus diesen Komponenten hergestellte Spritzbrühe ist absolut unproblematisch für die Natur, die Anwendung und die Weinfermentation und schützt die Vögel davor, sich in Netzen zu verfangen, und die Wespen vor Gift. Auf dem Markt wird als Haft- und Netzmittel eine "modifizierte Stärke" angeboten, bei der die Mehrfachzuckermolekularstruktur an mehreren Teilen zerschnitten wird, was zur Folge hat, dass die Oberflächenspannung des Wassertropfens erheblich gemindert wird, und damit einen Netzeffekt bewirkt.

Der kugelige Tropfen legt sich flach auf die Spritzoberfläche und belegt eine größere Fläche. Wenn die Offenlegungsschrift veröffentlicht wird und diese neue Methode zur Abwehr von Vögeln und Wespen bekannt wird, wird man sich auf dem Fachmarkt bemühen, auch andere Färbemittel außer Weiß zu finden, die den Vögeln und Wespen eventuell auch keine Fruchtreife signalisieren. Deswegen wird bei den Ansprüchen, was die Mittel für den Vogel- und Wespenschutz betrifft, dieser Begriff weit formuliert im Sinne von: "alle Mittel, deren Farbe für Vögel und Insekten keine Fruchtreife der Trauben signalisieren".

Die Versuche im Erntejahr 2020 haben gezeigt, dass das Besprühen der Trauben und zum Teil der Rebenblätter in Weiß zur Abwehr gegen Vögel und Wespen auch dann voll wirkt, wenn die Trauben nicht gänzlich mit der Farbe bedeckt sind. Anscheinend wirkt das gesamte Sprühbild von Weiß für Vögel und Wespen abweisend.

### 13. Verfahren zur Gestaltung eines neuartigen Bodenschutzes

Oben wurde auf die heutzutage angewendete Begrünungsmetode als Bodenschutz eingegangen. Der Erfinder kam auf die Idee, eine neue Art von Bodenschutz anzuwenden, die auf neuen Prinzipien basiert, alle Nachteile der Begrünung als Bodenschutz beseitigt und dazu viele Vorteile bringt.

Er kam auf die Idee, eine ca. 15 cm dicke Schicht aus Kiefer-, Tannen- und Pinienrinde in den Gassen und im Unterholz der Reben als Bodenschutz anzubringen. Die Folge wäre: eine volle Aufnahme des Regenwassers, ein Schutz der Erde vor Austrocknung, kein Wasserverlust durch Verdampfung, trockene Gassen, weil die Rinde nicht saugfähig ist und sehr schnell nach einem Regenfall wieder ganz trocken ist; da die Rinde dunkelbraun ist, zieht sie die Sonnenstrahlen an, erwärmt sich selbst aber nicht, sondern strahlt die Wärme in die Luft, sodass die Luft in der Gasse nach einen Regen schnell trocknet, was eine Entwicklung von Pilzkrankheiten verhindert; die dicke Schicht der Rinde verhindert einen Wachstum von Unkraut; sie verhindert nicht das Anbringen von Dünger, der ohne Verlust in die tieferen Schichten der Erde dringt; sie fördert die Ansiedlung von Kiefern und anderen Nützlingen; sie schützt die Erde vor schweren Maschinen, die durch die Gassen fahren, indem sich keine Erdrillen bilden, weil sich durch die dicke Schicht der Rinde der Druck der Reifen auf eine größere Fläche verteilt.

Die Rinde ist unverwüstlich und kann lange Zeit problemlos Hitze und Kälte aushalten, zudem ist als ansonsten unnützer Abfall der Holzindustrie billig. Beim Roden kann sie zur Seite geschoben und nach der Neupflanzung erneut flach verteilt werden.

### 14. Vorteile des neuartigen Splittkopf-Doppelstamm-Reberziehungssystems

Die Gestaltung des neuartigen Splittkopf-Doppelstamm-Reberziehungssystems mit der Anwendung des Radikalschnitts bildet ein neuartiges und sehr lockeres Splittkopfstockgerüst mit vorteilhafter Triebzuordnung und beseitigt alle Probleme des derzeitigen Standes der Technik, die mit der Bildung von Fruchtruten bei der Kordon- und Spaliererziehung und mit der apikalen Dominanz bestehen. Der Doppelstamm ermöglicht die Anbringung mehrerer Splittköpfe in einem kleinen Raum mit Triebabständen von 30 cm.

Die Überdachung ist preiswert, langlebig und wartungsfrei, sie bietet 100 % Schutz vor Regen und Hagel, womit keine Hagelversicherung mehr erforderlich ist. Wegen des Regenschutzes gibt es weniger Pilzbefall, eine Behandlung mit Kontaktpräparaten genügt somit. Der neuartige Sprühschutz gegen Vögel und Wespen ist preiswert und sehr wirkungsvoll. Der Bodenschutz im Weinbau mit Kiefernrinde ist neu, preiswert, praktisch, sehr langlebig und wirkungsvoll.

### Zeichenliste

- A: - Pfosten
- B1: - Stamm-1
- B2: - Stamm-2
- B3: - Doppelstamm
- B4: - Stammarm
- C: - Splittarm
- C1: - Splittfinger
- C2: - Fingerbinder
- D: - Splittkopf
- D1: - Einzelkopf
- D2: - Majak
- E: - Wasserschossauge
- E1: - Trieb
- F: - Triebbinder
- G: - Draht
- I: - Dachhalter
- I1: - Dachwinkel
- J: - Dachcenter
- J1: - Dachflügel-R
- J2: - Dachflügel-L
- J3: - Flügelscharniere
- J4: - Flügelriegel
- J5: - Riegelsperre
- J6: - Flügelriegelohr

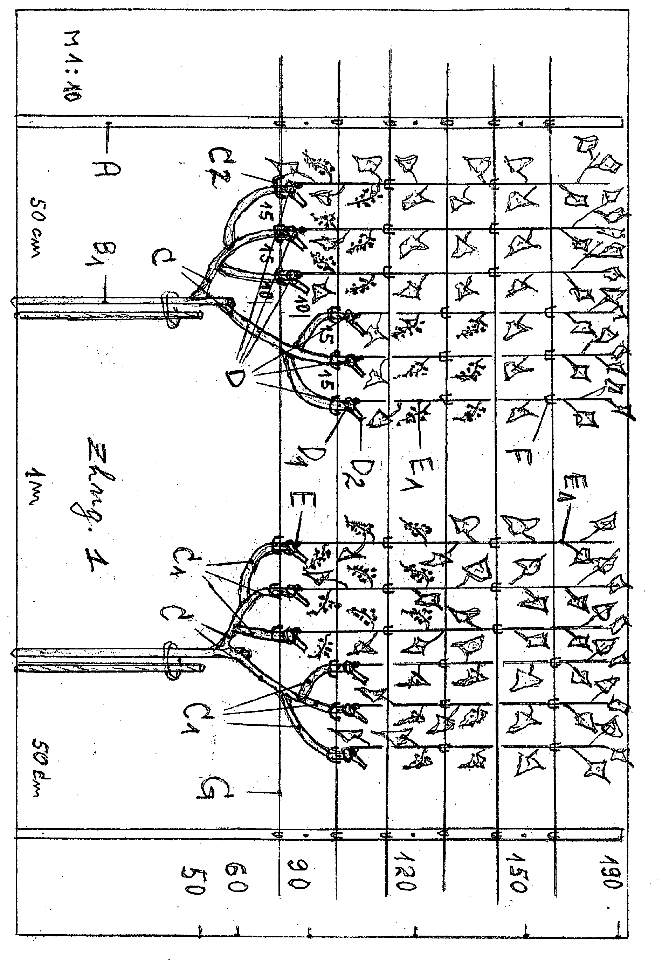

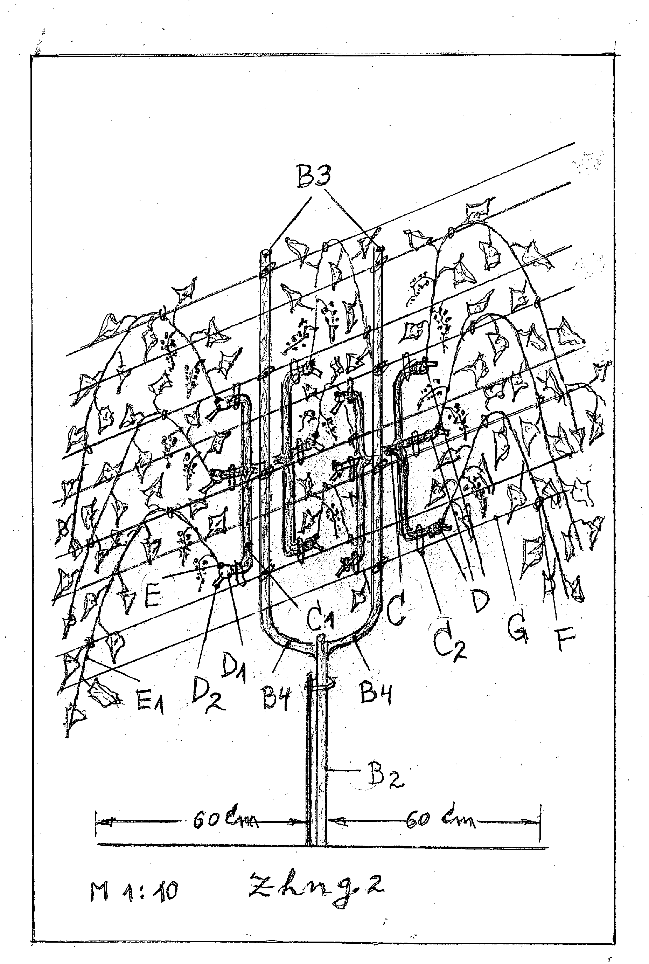

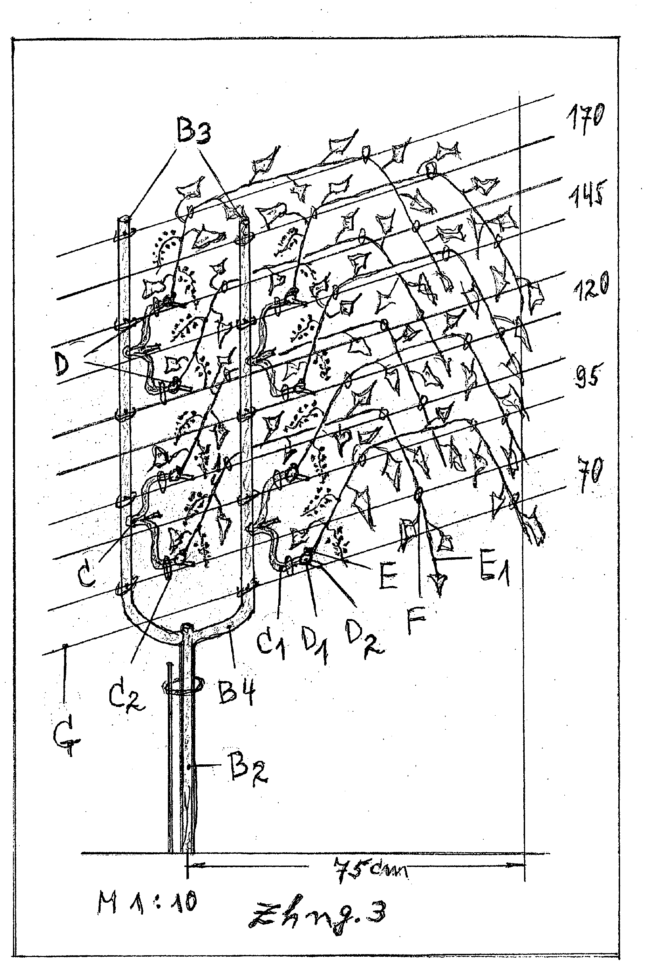

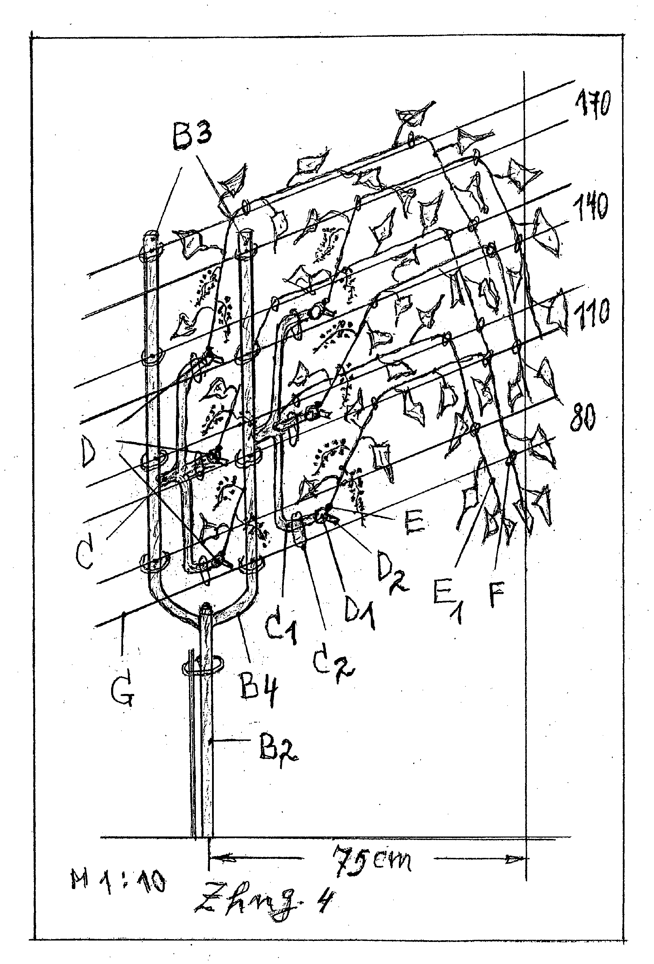

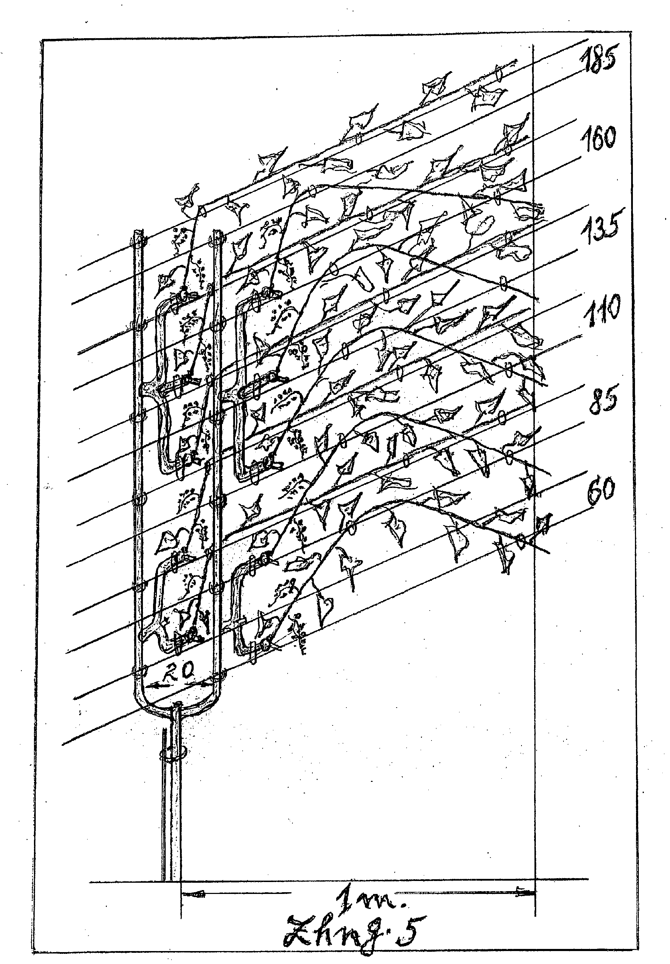

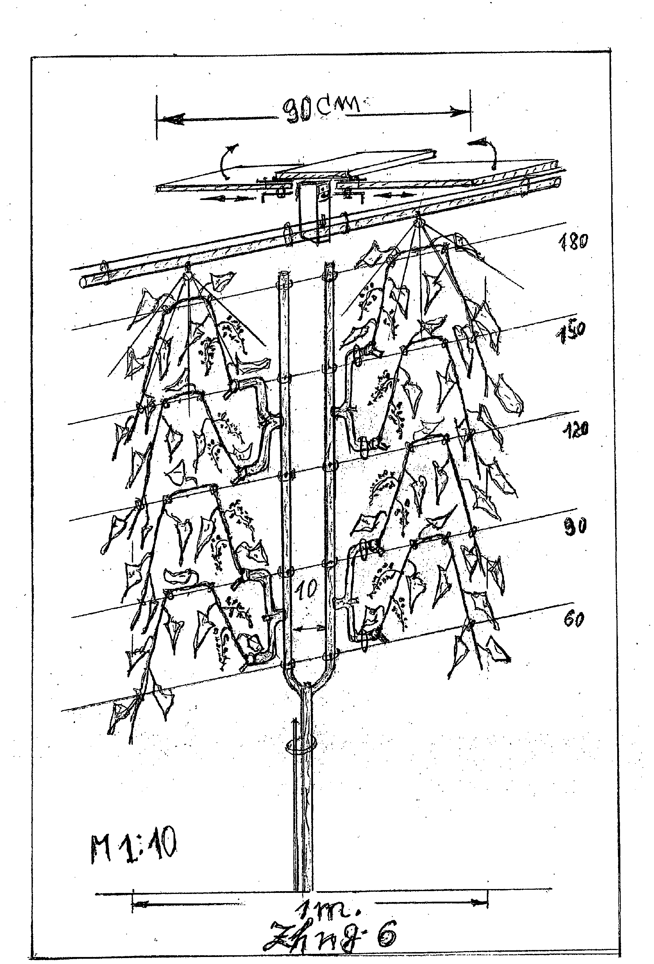

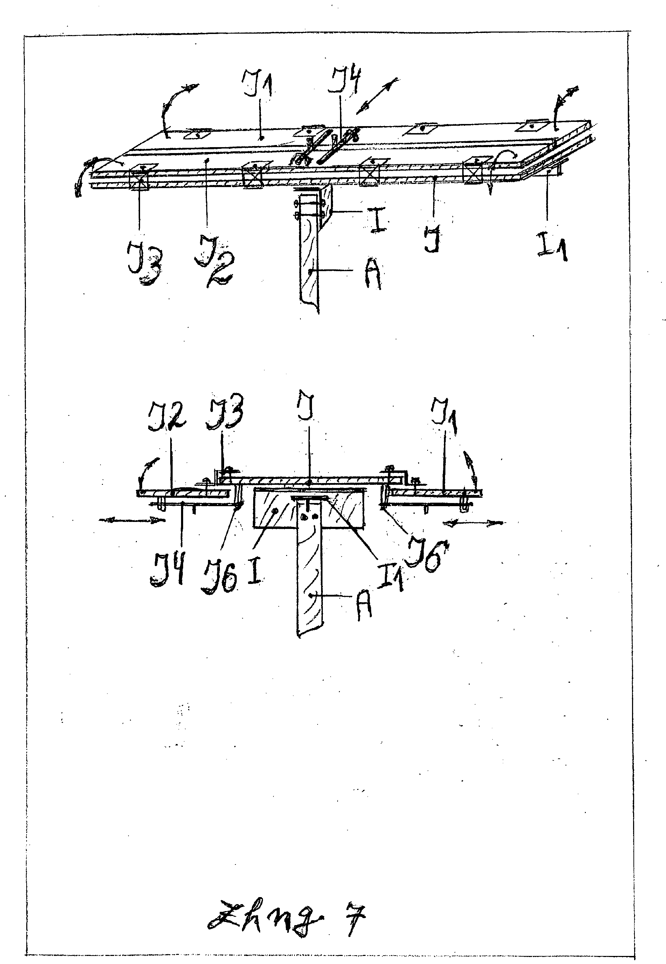

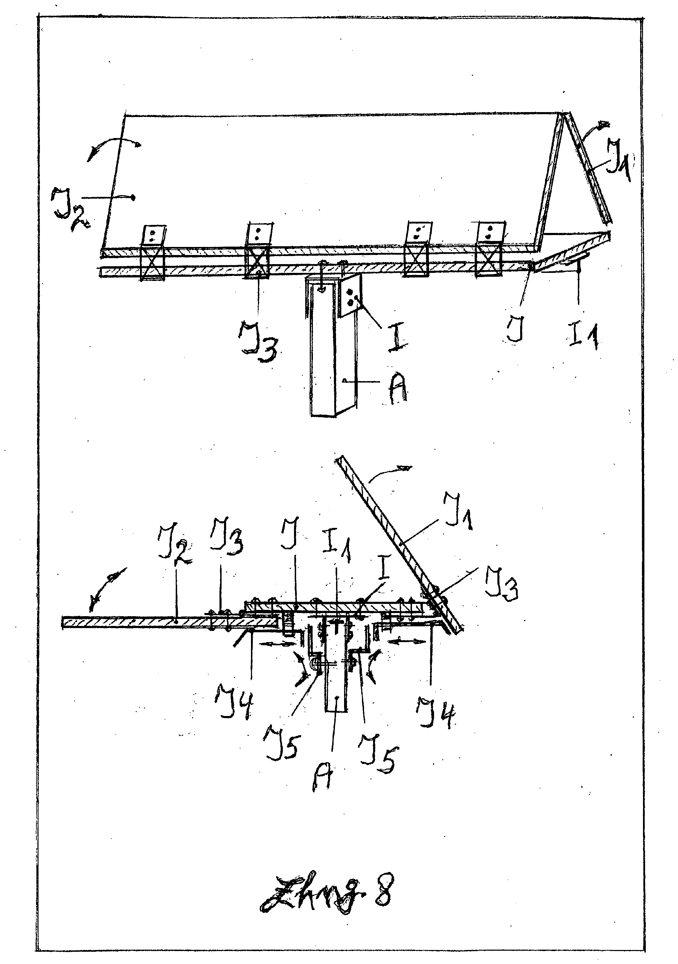

## Patentansprüche

1. Verfahren zur Gestaltung einen Splittkopf-Doppelstamm-Reberziehungssystems in zwei Varianten: Splittkopf auf Einzelstamm (Var. 1) und Splittkopf auf Doppelstamm (Var. 2),
**dadurch gekennzeichnet, dass** der Splittkopf (D); gewachsen auf Einzelstamm (B1) oder auf Doppelstamm (B3), mit Stammarmen (B4) und mit Splittarmen (C) mit Fingern (C1) mit je einem Einzelkopf (D1) gestaltet wird.

2. Verfahren nach Anspruch 1 der Variante 1,
**dadurch gekennzeichnet, dass** der Splittkopf (D), gewachsen am Stamm (B1), mit Splittarmen (C), wobei ein Splittarm (C) links und der andere Splittarm (C) rechts entlang der Reihe, vorzugsweise seitlich zueinander versetzt, sich befindet, mit einigen Fingern (C2) mit Einzelköpfen (D1), vertikal und mit Abstand zueinander entlang der Reihe geordnet, mit Majaks (D2) mit Wasserschossauge (E) und durch Radikalschnitt ohne jegliche Fruchtrute wie Zapfen, Strecker, lange Rute und andere gestaltet ist.

3. Verfahren nach Anspruch 1 der Variante 2,
**dadurch gekennzeichnet, dass** die Splittköpfe (D), gewachsen vorzugsweise auf beiden Seiten der Stammarme (B4) eines Doppelstammes (B3) entlang der Reihe, mit Splittarmen (C) mit einigen Fingern (C2) mit Einzelköpfen (D1), mit Abstand zueinander und horizontal entlang der Reihe geordnet, und mit Majak (D2) mit Wasserschossauge (E) und durch Radikalschnitt ohne jegliche Fruchtrute wie Zapfen, Strecker, lange Ruten und andere gestaltet sind.

4. Verfahren nach Anspruch 1 bis 3 mit einer Überdachung der Variante 1,
**dadurch gekennzeichnet, dass** die Überdachung aus Pfosten (A) mit Dachhalter (I) und Dachwinkel (I1) entlang der Reihe und aus dem darauf befestigten Dachcenter (J) mit Dachflügel-R (J1) und Dachflügel-L (J2) mit Flügelscharnier (J3) und Flügelriegel (J4) mit Flügelriegelohr (J6) besteht.

5. Verfahren nach Anspruch 1 bis 3 mit einer Überdachung der Variante 2,
**dadurch gekennzeichnet, dass** die Überdachung aus Pfosten (A) mit Dachhalter (I) und Dachwinkel (I1) entlang der Reihe und aus dem darauf befestigten Dachcenter (J) mit Dachflügel-R (J1) und Dachflügel-L (J2) mit Flügelscharnier (J3) und Flügelriegel (J4) mit Riegelsperre (J5) besteht.

6. Verfahren nach Anspruch 1 bis 3 mit Vogel- und Wespenschutz,
**dadurch gekennzeichnet, dass** der Vogel- und Wespenschutz eine Spritzlösung ist, die aus einem Mittel, dessen Farbe bei Vögeln und Insekten keine Fruchtreife signalisiert, wie Grün, Weiß und andere, vorzugsweise Weiß als hydriertes Kalkpulver Ca(OH)2, einem naturgemäßen neutralen Haftmittel, vorzugsweise Stärke als modifizierte Stärke, und Wasser besteht.

7. Verfahren nach Anspruch 1 bis 3 mit Bodenschutz,
**dadurch gekennzeichnet, dass** der Bodenschutz aus Baumrinde, vorzugsweise Kiefern-, Tannen- oder Pinienrinde, verlegt in einer dicken Schicht in den Gassen und im Unterholz der Rebanlage, besteht.
